# EUROPEAN PATENT SPECIFICATION

(11) **EP 1 501 226 B1**
(45) Date of publication and mention of the grant of the patent: **19.09.2007**
(21) Application number: 03016914.8
(22) Date of filing: 24.07.2003
(51) Int. Cl.: H04L 1/00

(54) **Method, encoder and communication device for encoding parallel concatenated data**
Verfahren, Kodierer und Kommunikationsvorrichtung zur Kodierung von parallel verketteten Daten
Procédé, codeur et appareil de télécommunications de codage des données concatenées parallèles

(43) Date of publication of application: 26.01.2005
(73) Proprietor: MATSUSHITA ELECTRIC INDUSTRIAL CO., LTD, Kadoma-city, Osaka 571-8501 (JP)
(72) Inventor: Golitschek Edler von Elbwart, Alexander, 64285 Darmstadt (DE); Seidel, Eiko, 64285 Darmstadt (DE); Wengerter, Christian, 63924 Kleinheubach (DE)
(74) Representative: Grünecker, Kinkeldey, Stockmair & Schwanhäusser Anwaltssozietät

(56) References cited:
- US-A1- 2001 034 868
- US-A1- 2002 101 915
- US-A1- 2002 118 126

## Description

This invention relates to forward error correction coding schemes, and is particularly applicable in communication systems where reliable transmission of data is required to overcome errors introduced by noise or interference.

Forward error correction (FEC) schemes are widely used in communication systems to increase the reliability of information transmission. Some popular FEC codes are convolutional codes, turbo codes, Reed-Solomon codes, or low-density parity-check codes as known for instance from instance from S. Lin, D.J. Costello Jr., "Error Control Coding: Fundamentals and Applications", Prentice-Hall 1983.

Forward error correction coding can be generally defined as a systematic scheme for the replacement of the original information symbol sequence by a sequence of code symbols, in such a way as to permit its reconstruction by a properly designed decoding scheme.

Usually a major division is between block coding and convolutional coding. In block coding, the information sequence is split into blocks of fixed length. Each of these blocks is then independently encoded using the block code, which usually is represented by a coding polynomial or coding matrix.

In contrast thereto, a convolutional code does not treat each code block independently, but adds dependence between successive blocks. Thus the current output block depends not only on information bits in the current input block, but also on those of one or more previous input blocks.

Typically convolutional codes are realised by using a shift register mechanism. Graphically a convolutional code can be represented by a state transition diagram or a trellis.

While in theory it is possible to extend the dependencies into infinity, in communication systems it is common practice to define a block length for convolutional codes as well.

This makes it possible to have a code structure which starts at the beginning of each block in a well-known state, and which ends at the end of each block in a well-known state, which is usually referred to as trellis termination. This will make the decoding scheme in the receiver more efficient.

To achieve a better protection of the information to be transmitted, several coding schemes can be employed simultaneously. This means that the information sequence is encoded several times, and the information sequence at the input of the encoders is identical. An obvious graphical representation is reminding of the parallel connection of electrical resistors to an electrical current, therefore such an approach is often called parallel coding scheme.

In a simple form, a parallel coding scheme can consist of two identical encoders, for example convolutional encoders. Other forms can make use of two different encoders, such as a convolutional encoder and a block encoder.

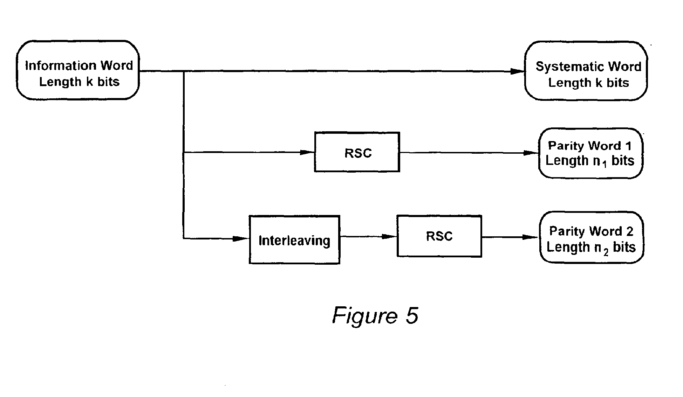

A popular parallel coding scheme widely known as turbo coding is e.g. available from Heegard, Chris; Wicker, Stephen B., "Turbo coding" chapter 4, Kluwer Academic Publishers 1999, ISBN 0-7923-8378-8. Illustrated in exemplary form in figure 5 is the structure of a prior art turbo encoder. Typically, two identical convolutional encoders with an additional interleaver are employed. The interleaver is used to de-correlate the input to the second encoder from the input of the first encoder.

A data source is generating an information word which consists of k information bits forming a code block. The resulting code word consists of three elements: The systematic word, first parity word and second parity word. The systematic word (length k bits) is identical to the information to be transmitted. The first parity information is generated employing a recursive systematic encoder (RSC). In the second encoder branch, an interleaver is employed to decorrelate the input sequences of both encoders. Both encoders use a generator polynomial to define the coding algorithm.

US 2003/0041293 A1 discloses methods to interleave a sequence of symbols. To this end the interleaver performs inter-block and intra-block permutations. Even though the sequence of symbols is segmented into blocks, these blocks are used solely for the purpose of interleaving, but not for generating blocks that are independently encoded.

US 2002/0150167 A1 discloses a configurable encoder which may operate in any of a variety of forward error correction codes. In each mode a variety of encoding parameters may be configured.

In the prior art, measures have been proposed, such as adding redundancy or diversity to the transmit signal to increase the receiver's possibility to correctly decode the transmitted data.

US-A1-2001/034868 discloses in the context of a data stream encoder used for a digital cellular mobile radio system to divide an input data stream and distribute same onto a plurality of coding branches, each comprising an interleaver and an encoder. In this way, sets of shared information bits are formed, which comprise information bits in common with respective pairs of the plurality of parsed data sub-streams.

The object of the present invention is to effectively exploit coding properties and to allow a simple but effective method to increase the protection of the transmitted information, especially in wireless communication systems with unreliable transmission due to noise or interference.

The present invention provides a method comprising the steps of claim 1 and is also directed to a correspondingly adapted encoder and communication device.

The general idea underlying the invention is to distribute the information word having a length into a plurality of subsets of information bits, each subset forming a code block segment, respectively. Then at least one of the code block segments is supplemented with information bits, which have also been distributed to at least one different code block segment. The result of that is that the sum of the lengths of the code block segments is larger than the total code block length. In this way, an information overlap is generated, where a part of the information at the input is propagated to at least two outputs. Hence, the sum of the information bits over all subbranches at the output of the distributor is greater than the number of information bits at the input of the distributor.

According to a preferred embodiment, the distribution is done across a plurality of parallel coding subbranches and within each coding subbranch, a distinct error correction coding method can be employed. However, the distributor does not necessarily need to assign an identical number of information bits to the coding subbranches involved.

Hence, each of the subbranches can use distinct error correction coding methods and the block length within each subbranch can be distinct as well.

In order to realize time diversity, it may be necessary to buffer at least a portion of either the complete code block or one or more of the code block segments prior to encoding same.

Preferably, the encoding of the code block segments or code blocks is performed using different encoding methods, which furthermore increases the effectiveness in protecting the data bits.

According to a preferred embodiment of the invention, the distribution of the code blocks is performed into code block segments of equal length. This facilitates a simple encoding operation and increases the processing speed.

It further increases the performance of the encoding method, if the step of interleaving the information bits is performed in the coding branches or subbranches, preferably with different interleaving patterns.

According to further preferred embodiments of the invention, the distribution of the information bit sequence is performed either by periodically switching the input bit sequence to one of the subbranches and subsequently repeated to another subbranch or a transition/puncturing vector or matrix determines which bits are forwarded to which subbranches or removed.

The invention will become apparent from the following description of the preferred embodiments with reference to the accompanying drawings.
- **Figure 1**: shows a block diagram which illustrates the general idea of the present invention;
- **Figure 2**: is an embodiment of the invention illustrating its application to a turbo encoder;
- **Figure 3**: shows an encoder according to the present invention with additional elements involved in the coding operation;
- **Figure 4**: gives an alternative embodiment of the present invention using identical coding methods within the subbranches of one coding branch;
- **Figure 5**: shows a prior art turbo encoder in simplified form.

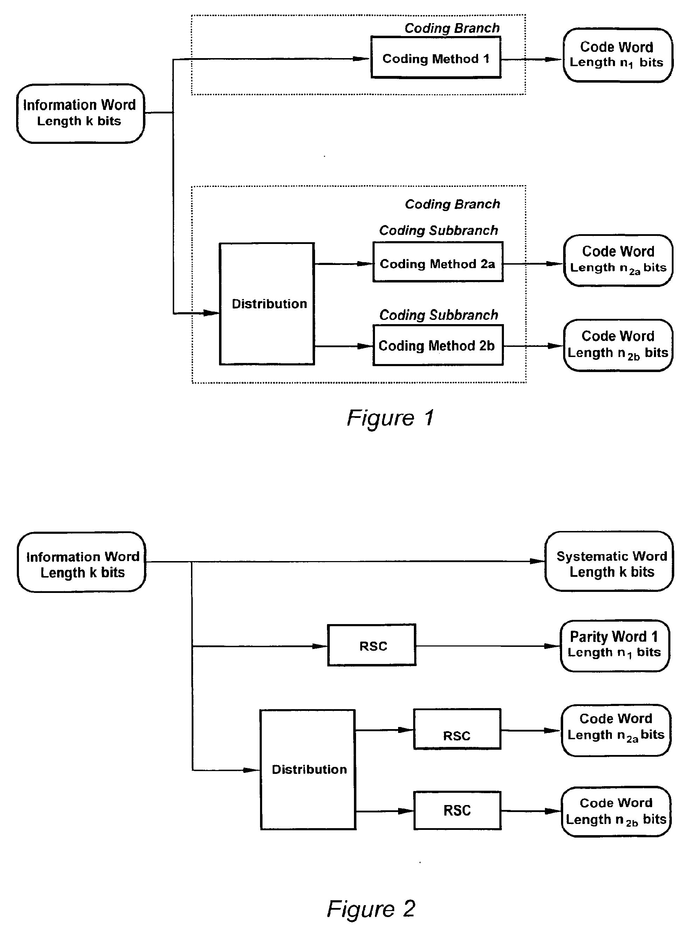

The following is a definition of important terms, used in the context of the invention referring to figure 1.

### Information Word or Information Bit Sequence

Block codes are defined in line with S. Lin, D.J. Costello Jr., "Error Control Coding: Fundamentals and Applications", Prentice-Hall 1983, chapter 1.2. A message block is represented by the k-tuple **u**=(u₁, u₂, ....., uₖ) called an information word or information bit sequence. For convolutional codes, we use a different definition. An information word is the k-tuple **u**=(u₁, u₂, ....., uₖ), where the convolutional encoder memory is cleared before u₁ enters the encoder.

### Coding Branch

Coding branch is defined by a branch where the full information word is available to subsequent entities.

### Coding Subbranch

A coding subbranch is a portion of a coding branch, wherein only a subset of the information bits are available to the blocks within the coding subbranch.

### Code Block

A code block is a logical unit of information symbols which are affected by a coding process.

### Subset

A subset denotes a part of a set, where the empty set and the original set are by definiton also subsets of the original set.

Figure 1 shows a block diagram of an encoder as comprised in a communication device of the present invention. At the input of the encoder, an information word having *k* bits is applied as a code block to two coding branches. In the first coding branch, a method 1 is used to obtain a code word 1 having a length of *n₁* bits with *n₁* being larger than *k*. Generally, the coding operation serves for adding redundancy in order to protect the information bits better against losses over the transmission path.

In the second branch, the k bits of the information word are distributed over two distinct subbranches, so that a first subset of the information bits (also referred to as a code block segment) is encoded in the first subbranch using method 2a and a second subset of the information bits is encoded in the second subbranch using method 2b. These bit subsets shall be fashioned in such a way that at least a part of the subsets carries identical information from the original information word, which will be referred to as "information overlap" in the following. For simplicity, it is assumed here that the code block segments in the subbranches are of equal length, which implies that k is an even number. The results of the encoding operation are two code words 2a, 2b having a length of *n₂ₐ* and *n_{2b}* bits, respectively.

It is important to note that the information bit subsets are encoded separately and independently in each subbranch. In a simple implementation, the encoding method in the subbranches is identical, such that their generator polynomials are identical as well. The encoded bit sequences of each subbranch then constitute jointly a parity word which replaces the second parity word of the prior art encoder shown in Figure 5.

The information overlap allows the designer of a communication system where the present invention is employed to specifically fine-tune the degree of FEC protection. Clearly the information overlap bits are better protected by FEC coding than other bits, which usually results in a better error resilience after properly decoding the information. By choosing the length of the information overlap a communication system designer can directly influence the overall protection of an information word. By choosing which parts of an information word are part of the information overlap, a designer can influence which part of the information word benefits most from the FEC coding. This can be particularly applicable if it is known that a certain part of the information word has a higher priority than other parts with respect to the content that is delivered.

It should be obvious to those skilled in the art that the generated parity sequences can be further manipulated or assembled to obtain a complete code word for the information word. While those are necessary or desired operations, they are not required for explaining the present invention and are consequently not described in further detail.

The coding method does not need to be identical in all the coding branches or subbranches. The difference can be fundamental, such as convolutional code in one branch and block code in another. On the other h and t here could also be differences within the same coding family, such as different generator polynomials in convolutional encoders in the branches, or for example a different coding matrix which is used in different branches. The type or nature of the employed encoders in the branches is not restricted by the present invention. As an example the encoders in figure 1 labelled "Coding Method 1", "Coding Method 2a" and "Coding Method 2b" can be chosen freely and independently within the limits imposed by the communication system design for which the present invention is used.

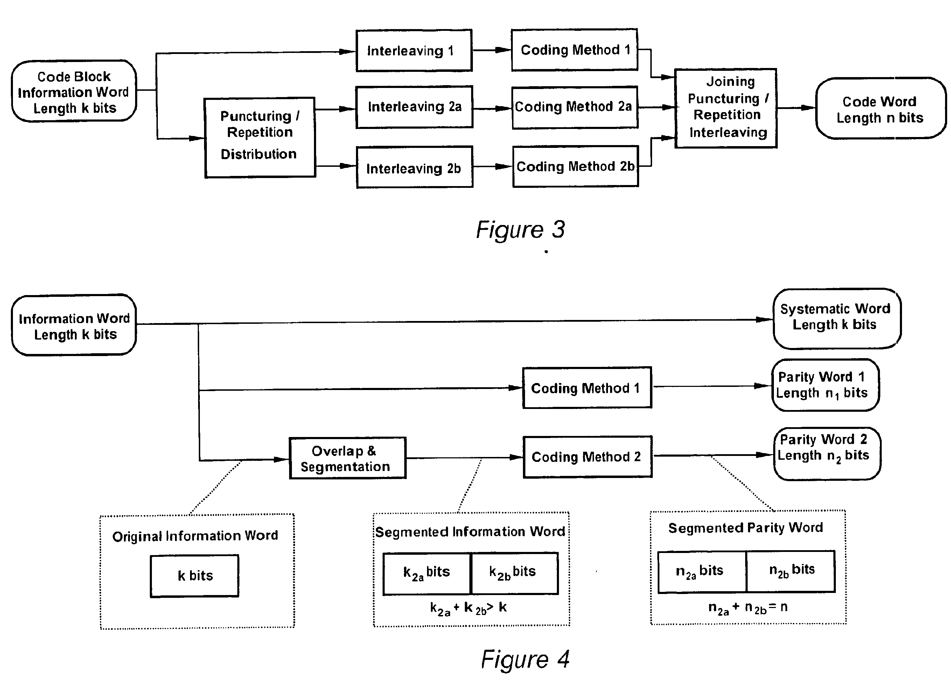

Figure 2 shows an embodiment of the invention illustrating its application to a turbo encoder. As can be seen when comparing this figure with figure 1, the essential difference can be seen in the fact that the information word is directly provided as systematic word to be output. Further, parity word 1 is obtained by employing a recursive systematic encoder RSC, thereby constituting the coding branch having a parity word 1 at its output. The second coding branch is further divided into two coding subbranches to obtain a parity word 2a and parity 2b, as explained above in connection with figure 1. When compared with figure 5, the prior art turbo encoder is modified in respect to the second encoder branch with the result that the two parity words 2a and 2b jointly constitute parity word 2 .
For improved performance, one or more optional interleavers may be introduced within a coding branch or subbranch, see Figure 3. This can be necessary to further improve the properties and performance of the employed coding schemes.

Another embodiment not explicitly shown in figure 3, but is apparent to those skilled in the art, would be obtained by modifying the position of interleavers 2a, 2b by placing an interleaver 2 just prior to the separation unit.

For both embodiments, it has been proven that using a different interleaving pattern for either the different coding subbranches or between the coding branch at the coding subbranches improves the performance of the coding operation.

The distribution of the code block into two or more code block segments can be implemented in several forms. Simple forms include a switch which periodically switches the input to one or more of the subbranches, a transition vector or matrix which signifies which input bit shall be forwarded to which output or a puncturing vector or matrix for each subbranch that determines which bits can pass through and which bits are removed for that particular subbranch.

A further implementation is formed by a combination of a switch and a repeater. The switch periodically propagates an information bit to only one of the connected outputs. This is the data which is not part of the information overlap. The repeater propagates an information bit to multiple connected outputs. This is the data which is part of the information overlap.

It should be obvious to those skilled in the art that the information overlap can be designed for each branch independently, if multiple branches employ the method of the present invention. In other words the information overlap of a first coding branch can be different, partly equal, or equal to the information overlap of a second coding branch.

In case the encoding methods within subbranches of a branch are identical, an alternative layout is possible. An example is given in figure 4. Instead of distributing the information bit sequence into distinct parallel subbranches, it is distributed into two or r more segments, which are then individually encoded in a time diversity manner using the encoder method chosen for that branch.

In more detail, the information bits of the code block are used to form a systematic word and parity word 1 using a coding method 1 as explained above. Further, the original information word constituted by *k* bits is buffered and undergoes block segmentation using one of the methods described above. Hence, the code block is separated into two code block segments, each containing a segmented information word of *k₂ₐ* bits and *k_{2b}* bits, respectively. Subsequently, by using coding method 2, the first segment is encoded resulting in a first portion of the segmented parity word with *n₂ₐ* bits. This portion of the segmented parity word may be stored again in a buffer for later use. As the next step, a second segmented information word having *k_{2b}* bits is encoded using the same coding method 2 to obtain the second portion of the parity word comprised by *n_{2b}* bits. The two parity word segments may then be combined to form the complete parity word 2 having a length of *n₂* bits.

It is clear to a person skilled in the art that other than the above described segmentation in two halves of substantially equal length can be chosen depending on the actual encoder design. In particular, a partitioning in more than two segments might be a favorable option.

Preferably the segmentation is done such that the segments are of identical length. If this is not possible, then well-known techniques may be employed so that the resulting segments are of equal length. Possible solutions for this are zero-stuffing or partial repetition of the information bit sequence. Alternatively the segments may have different lengths provided that the length is not a criterion for the encoding scheme. For example in convolutional coding the block length is irrelevant for the design of most encoders.

In case of convolutional coding for an encoder, some sort of trellis termination can be desirable. This means that certain bits are appended either to the encoder input or the encoder output, which makes the state of the encoder at the end of a codeblock to be independent of the information bit sequence which is encoded. Preferably this termination state is the all-zero state. Further details about termination can be found in S. Lin, D.J. Costello Jr., "Error Control Coding: Fundamentals and Applications", Prentice-Hall 1983.

If so-called termination bits are appended, there are two options. Either termination bits are appended to the information bit sequence within the respective coding branch or subbranch only or termination bits are appended to the information bit sequence in several or all coding branches or subbranches. It should be obvious for those skilled in the art how either option can be implemented.

To facilitate efficient decoding methods, it can be desirable to include an error detection code, such as a cyclic redundancy checksum (CRC). Such a code can be freely inserted prior to either the distributor or the encoder in a branch or subbranch. In rare cases it might also be useful to attach an error detection code to the code word or parts of it, i.e. to systematic or parity words or subsets of these.

The embodiments explained above showed a case where there are two coding branches, and the second branch is further divided into two subbranches. However the present invention can be easily extended to a by theory unlimited number of branches as well as reduced to one branch which is further divided into subbranches. It is also open how many and which of the branches should be further divided into subbranches.

Likewise the number of subbranches can be more than two, and can also be different in case several branches are divided into subbranches.

Puncturing or Repetition can be employed in several phases of the method of the present invention to improve the performance or make fine adjustments to the amount of coding protection which is desired in the system.

With reference to figure 3, it can be seen that firstly, the length of the information word which is at the input of a coding branch can be adjusted by puncturing or repetition of bits. Preferably this is done prior to distribution of the information word into coding subbranches. Alternatively such adjustments can also be implemented after distribution but prior to encoding. It should be apparent to those skilled in the art that both forms are equivalent in effect and can be transformed into each other.

Secondly, an adjustment is possible for the resultant code word. Preferably this is done after the systematic and parity parts have been joined together. Alternatively the adjustments can be done within each coding branch or subbranch after the encoding but prior to joining. Again those skilled in the art will recognise that these forms can be transformed into each other.

In the foregoing description and the drawings, the terms "Systematic" and "Parity" have been used along how they are usually referred to in public literature related to turbo coding. This has been done to keep the description of the invention simple and easy to follow.

However the present invention can also be used in parallel coding schemes which do not make such a distinction between systematic and parity bits or words, but generally simply refer to code bits or words as illustrated and described above with reference to figure 1.

## Claims

1. A method of encoding an information bit sequence forming a code block in a communication device of a communication system the method comprising the steps of:
distributing the bits of the information bit sequence forming a code block having a length k bits into a plurality of n subsets of information bits, each subset forming a code block segment having a length k1 to kn bits respectively;
the method **characterized by**
supplementing at least one code block segment with information bits by partial repetition of the information bit sequence which have also been distributed to at least one different code block segment or by zero stuffing, such that the sum of the lengths k1 to kn of the code block segments is larger than the code block length k; and
encoding the code block segments and the at least one supplemented code block segment individually using at least one encoding method.

2. The method according to claim 1, further comprising the step of encoding the information bit sequence forming the code block individually and separate from the encoding operations of the plurality of code block segments.

3. The method according to claim 2, wherein the step of encoding the information bit sequence is performed in a second coding branch arranged in parallel to a first coding branch, wherein the distribution and encoding operations on the plurality of code block segments are performed in a first coding branch independently of the encoding operations in a second coding branch.

4. The method according to one of claims 1 to 3, wherein the encoding steps of the code blocks and/or the code block segments are performed in a time diversity manner.

5. The method according to one of claims 1 to 4, further comprising the additional step of buffering at least a portion of either the code block or the code block segments prior to the encoding step.

6. The method according to one of claims to one of claims 1 to 5, wherein the encoding of the code block segments or code blocks is performed using different encoding methods.

7. The method according to one of claims 1 to 6, wherein the encoding steps use at least one of convolutional codes, trellis codes, turbo codes, Reed-Solomon codes, parity check codes.

8. The method according to one of claims 1 to 7, wherein the encoding step of the code block segments or code blocks is performed in a plurality of parallel coding subbranches.

9. The method according to one of claims 1 to 8, wherein the information bits of the code block segments are at least partly identical to each other to form an information overlap.

10. The method according to one of claims 1 to 9, wherein the segmentation of the code blocks is performed into code block segments of equal length.

11. The method according to one of claims 1 to 10, wherein the bits of the code blocks and code block segments are combined after encoding to form a code word corresponding to the original information bit sequence.

12. The method according to one of claims 1 to 11, further comprising the step of interleaving the information bits of one or more coding branches and/or subbranches.

13. The method according to claim 12, wherein the interleaving step uses different interleaving patterns for different coding branches or subbranches.

14. The method according to claim 12 or 13, wherein the step of interleaving the information bits is performed after distribution and prior to the encoding step into code block segments.

15. The method according to one of claims 1 to 14, further comprising the step of adjusting the length of the code block prior to its separation into code block segments.

16. The method according to claim 15, wherein the adjustment is obtained by appending termination bits to the information bit sequence in at least one coding branch or coding subbranch.

17. The method according to one of claims 1 to 16, further comprising the step of including an error detection code inserted before the encoding step.

18. The method according to one of claims 1 to 17, wherein the distribution is performed by periodically switching the input bit sequence to at least one of the coding branch or subbranch and repeating the application of bits of the input bit sequence to another coding branch or subbranch.

19. The method according to one of claims 1 to 17, wherein the distribution is performed using a transition vector or matrix which signifies which input bit shall be distributed to which coding branch or subbranch.

20. The method according to one of claims 1 to 17, wherein the distribution is performed using a puncturing vector or matrix that determines which bits can pass through and which bits are removed for a particular coding branch or subbranch.

21. The method according to one of claims 1 to 20, further comprising the step of choosing which part of the information bit sequence has higher priority than other parts of said sequence and selecting this part of the information bit sequence for the supplementing step, wherein the information bits are distributed to different code block segments.

22. An encoder for a communication device of a wireless communication system for encoding an information bit sequence forming a code block, the encoder comprising:
means for distributing the bits of the information bit sequence forming a code block and having a length k bits into a plurality of n subsets of information bits, each subset forming a code block segment having a length k1 to kn bits respectively;
the encoder **characterized by**
means for supplementing at least one code block segment with information bits by partial repetition of the information bit sequence which have also been distributed to at least one different code block segment or by zero stuffing, such that the sum of the lengths k1 to kn of the code block segments is larger than the code block length k; and
means for encoding the code block segments and the at least one supplemented code block segment individually using at least one encoding method.

23. A communiction device of a wireless communication system comprising an encoder according to claim 22.

## Patentansprüche

1. Verfahren zum Codieren einer Informationsbitsequenz, die einen Codeblock bildet, in einer Kommunikationsvorrichtung eines Kommunikationssystems, wobei das Verfahren die folgenden Schritte umfasst:
Verteilen der Bits der Informationsbitsequenz, die einen Codeblock mit einer Länge von k Bits bildet, auf eine Vielzahl von n Teilgruppen von Informationsbits, wobei jede Teilgruppe ein Codeblocksegment bildet, das jeweils eine Länge von k1 bis kn Bits hat;
wobei das Verfahren **gekennzeichnet ist durch**:
Ergänzen des wenigstens einen Codeblocksegments mit Informationsbits **durch** teilweise Wiederholung der Informationsbitsequenz, die auch auf wenigstens ein anderes Codeblocksegment verteilt worden sind, oder **durch** Null-Auffüllen, so dass die Summe der Längen k1 bis kn der Codeblocksegmente größer ist als die Codeblocklänge k; und
individuelles Codieren der Codeblocksegmente und des wenigstens einen ergänzten Codeblocksegments unter Verwendung wenigstens eines Codierverfahrens.

2. Verfahren nach Anspruch 1, das des Weiteren den Schritt des individuellen Codierens der Informationsbitsequenz, die den Codeblock bildet, separat zu den Codiervorgängen der Vielzahl von Codeblocksegmenten umfasst.

3. Verfahren nach Anspruch 2, wobei der Schritt des Codierens der Informationsbitsequenz in einem zweiten Codierzweig durchgeführt wird, der parallel zu einem ersten Codierzweig angeordnet ist, und die Vorgänge des Verteilens und Codierens der Vielzahl von Codeblocksegmenten in einem ersten Codierzweig unabhängig von den Codiervorgängen in einem zweiten Codierzweig durchgeführt werden.

4. Verfahren nach einem der Ansprüche 1 bis 3, wobei die Schritte des Codierens der Codeblöcke und/oder der Codeblocksegmente im Zeit-Diversity-Verfahren durchgeführt werden.

5. Verfahren nach einem der Ansprüche 1 bis 4, das des Weiteren den zusätzlichen Schritt des Pufferns wenigstens eines Teils entweder des Codeblocks oder der Codeblocksegmente vor dem Codierschritt umfasst.

6. Verfahren nach einem der Ansprüche 1 bis 5, wobei das Codieren der Codeblocksegmente oder Codeblöcke unter Verwendung verschiedener Codierverfahren durchgeführt wird.

7. Verfahren nach einem der Ansprüche 1 bis 6, wobei die Codierschritte wenigstens Faltungs-Codes, Trellis codes, Turbo-Codes, Reed-Solomon-Codes, oder Paritätsprüf-Codes verwenden.

8. Verfahren nach einem der Ansprüche 1 bis 7, wobei der Schritt des Codierens der Codeblocksegmente oder Codeblöcke in einer Vielzahl paralleler Codier-Teilzweige durchgeführt wird.

9. Verfahren nach einem der Ansprüche 1 bis 8, wobei die Informationsbits der Codeblocksegmente wenigstens teilweise identisch miteinander sind, um eine Informationsüberlappung zu erzeugen.

10. Verfahren nach einem der Ansprüche 1 bis 9, wobei die Segmentierung der Codeblöcke in Codeblocksegmente gleicher Länge durchgeführt wird.

11. Verfahren nach einem der Ansprüche 1 bis 10, wobei die Bits der Codeblöcke und Codeblocksegmente nach dem Codieren kombiniert werden, um ein Codewort auszubilden, das der ursprünglichen Informationsbitsequenz entspricht.

12. Verfahren nach einem der Ansprüche 1 bis 11, das des Weiteren den Schritt des Interleaving der Informationsbits eines oder mehrerer Codierzweige und/oder -Teilzweige umfasst.

13. Verfahren nach Anspruch 12, wobei der Schritt des Interleaving verschiedene Interleaving-Muster für verschiedene Codier-Zweige oder -Teilzweige verwendet.

14. Verfahren nach Anspruch 12 oder 13, wobei der Schritt des Interleaving der Informationsbits nach Verteilung und vor dem Schritt des Codierens in Codeblocksegmente durchgeführt wird.

15. Verfahren nach einem der Ansprüche 1 bis 14, das des Weiteren den Schritt des Regulierens der Länge des Codeblocks vor seiner Auftrennung in Codeblocksegmente umfasst.

16. Verfahren nach Anspruch 15, wobei die Regulierung erreicht wird, indem Abschlussbits an die Informationsbitsequenz in wenigstens einem Codier-zweig oder Codier-Teilzweig angehängt werden.

17. Verfahren nach einem der Ansprüche 1 bis 16, das des Weiteren den Schritt des Einschließens eines Fehlererfassungscodes umfasst, der vor dem Codierschritt eingefügt wird.

18. Verfahren nach einem der Ansprüche 1 bis 17, wobei die Verteilung durch periodisches Umstellen der Eingangsbitsequenz auf wenigstens einen Codierzweig oder -Teilzweig und Wiederholen der Anwendung von Bits der Eingangsbitsequenz auf einen anderen Codier-Zweig oder -Teilzweig durchgeführt wird.

19. Verfahren nach einem der Ansprüche 1 bis 7, wobei die Verteilung unter Verwendung eines Übergangsvektors oder einer Matrix durchgeführt wird, der/die angibt, welches Eingangsbit auf welchen Codier-Zweig oder -Teilzweig verteilt werden soll.

20. Verfahren nach einem der Ansprüche 1 bis 17, wobei die Verteilung unter Verwendung eines Punktier-Vektors oder einer Matrix durchgeführt wird, die für einen bestimmten Codier-Zweig oder -Teilzweig bestimmt, welche Bits passieren können und welche Bits entfernt werden.

21. Verfahren nach einem der Ansprüche 1 bis 20, das des Weiteren den Schritt umfasst, mit dem ausgewählt wird, welcher Teil der Informationsbitsequenz eine höhere Priorität hat als andere Teile der Sequenz und dieser Teil der Informationsbitsequenz für den Schritt des Ergänzens ausgewählt wird, wobei die Informationsbits auf verschiedene Codeblocksegmente verteilt werden.

22. Codierer für eine Kommunikationsvorrichtung eines Drahtlos-Kommunikationssystems zum Codieren einer Informationsbitsequenz, die einen Codeblock bildet, wobei der Codierer umfasst:
eine Einrichtung zum Verteilen der Bits der Informationsbitsequenz, die einen Codeblock bildet und eine Länge von k Bits hat, auf eine Vielzahl von n Teilgruppen von Informationsbits, wobei jede Teilgruppe ein Codeblocksegment bildet, das jeweils eine Länge von k1 bis kn Bits hat;
wobei der Codierer **gekennzeichnet ist durch**:
eine Einrichtung zum Ergänzen wenigstens eines Codeblocksegmentes mit Informationsbits **durch** teilweise Wiederholung der Informationsbitsequenz, die auch auf wenigstens ein anderes Codeblocksegment verteilt worden sind, oder **durch** Null-Auffüllen, so dass die Summe der Längen k1 bis kn der Codeblocksegmente größer ist als die Codeblocklänge k; und
eine Einrichtung zum individuellen Codieren der Codeblocksegmente und des wenigstens einen ergänzten Codeblocksegment unter Verwendung wenigstens eines Codierverfahrens.

23. Kommunikationsvorrichtung eines Drahtlos-Kommunikationssystems, die einen Codierer nach Anspruch 22 umfasst.

## Revendications

1. Procédé consistant à encoder une séquence binaire d'informations formant un bloc de code dans un dispositif de communication d'un système de communication, le procédé comprenant les étapes consistant à :
distribuer les éléments binaires de la séquence binaire d'informations formant un bloc de code ayant des éléments binaires de longueur k dans une pluralité de n sous-ensembles d'éléments binaires d'informations, chaque sous-ensemble formant un segment de bloc de code ayant respectivement des éléments binaires de longueur k1 à kn ;
le procédé **caractérisé en ce qu'**il
complète au moins un segment de bloc de code avec des éléments binaires d'informations par la répétition partielle de la séquence binaire d'informations qui ont également été distribués à au moins un segment de bloc de code différent ou par un remplissage de zéros, de telle sorte que la somme des longueurs k1 à kn des segments de bloc de code est plus élevée que la longueur de bloc de code k ; et
encode les segments de bloc de code et le au moins un segment de bloc de code complété en utilisant de façon individuelle au moins un procédé d'encodage.

2. Procédé selon la revendication 1, comprenant en outre l'étape consistant à encoder la séquence binaire d'informations formant le bloc de code de façon individuelle et séparée des opérations d'encodage de la pluralité de segments de bloc de code.

3. Procédé selon la revendication 2, dans lequel l'étape consistant à encoder la séquence binaire d'informations est exécutée dans une deuxième branche de codage disposée en parallèle d'une première branche de codage, dans laquelle les opérations de distribution et d'encodage sur la pluralité de segments de bloc de code sont exécutées dans une première branche de codage de façon indépendante des opérations d'encodage dans une deuxième branche de codage.

4. Procédé selon l'une des revendications 1 à 3, dans lequel les étapes d'encodage des blocs de code et/ou des segments de bloc de code sont exécutées d'une façon diversifiant le temps.

5. Procédé selon l'une des revendications 1 à 4, comprenant en outre l'étape supplémentaire consistant à mettre en mémoire tampon au moins une partie soit du bloc de code soit des segments de bloc de code avant l'étape d'encodage.

6. Procédé selon l'une des revendications 1 à 5, dans lequel l'encodage des segments de bloc de code ou des blocs de code est exécuté en utilisant des procédés d'encodage différents.

7. Procédé selon l'une des revendications 1 à 6, dans lequel les étapes d'encodage utilisent au moins un parmi des codes de convolution, des codes de treillis, des turbo-codes, des codes de Reed-Solomon, des codes de contrôle de parité.

8. Procédé selon l'une des revendications 1 à 7, dans lequel l'étape d'encodage des segments de bloc de code ou des blocs de code est exécutée dans une pluralité de sous-branches de codage parallèles.

9. Procédé selon l'une des revendications 1 à 8, dans lequel les éléments binaires d'informations des segments de bloc de code sont au moins partiellement identiques les uns aux autres pour former un chevauchement d'informations.

10. Procédé selon l'une des revendications 1 à 9, dans lequel la segmentation des blocs de code est exécutée dans des segments de bloc de code de longueur égale.

11. Procédé selon l'une des revendications 1 à 10, dans lequel les éléments binaires des blocs de code et des segments de bloc de code sont combinés après l'encodage pour former un mot de code correspondant à la séquence binaire d'informations originale.

12. Procédé selon l'une des revendications 1 à 11, comprenant en outre l'étape consistant à entrelacer les éléments binaires d'informations d'une ou de plusieurs branches et/ou sous-branches de codage.

13. Procédé selon la revendication 12, dans lequel l'étape d'entrelacement utilise des configurations d'entrelacement différentes pour des branches ou sous-branches de codage différentes.

14. Procédé selon la revendication 12 ou 13, dans lequel l'étape consistant à entrelacer les éléments binaires d'information est exécutée après l'étape de distribution et avant l'étape d'encodage dans des segments de bloc de code.

15. Procédé selon l'une des revendications 1 à 14, comprenant en outre l'étape consistant à régler la longueur du bloc de code avant sa séparation en segments de bloc de code.

16. Procédé selon la revendication 15, dans lequel le réglage est obtenu en annexant des éléments binaires de terminaison à la séquence binaire d'informations dans au moins une branche de codage ou sous-branche de codage.

17. Procédé selon l'une des revendications 1 à 16, comprenant en outre l'étape consistant à inclure un code de détection d'erreur inséré avant l'étape d'encodage.

18. Procédé selon l'une des revendications 1 à 17, dans lequel la distribution est exécutée en déplaçant de façon périodique la séquence binaire d'entrée vers au moins une parmi la branche de codage ou sous-branche et en répétant l'application d'éléments binaires de la séquence binaire d'entrée à une autre branche de codage ou sous-branche.

19. Procédé selon l'une des revendications 1 à 17, dans lequel la distribution est exécutée en utilisant un vecteur de transition ou matrice qui indique quel élément binaire devrait être distribué à quelle branche de codage ou sous-branche.

20. Procédé selon l'une des revendications 1 à 17, dans lequel la distribution est exécutée en utilisant un vecteur de poinçonnement ou matrice qui détermine lesquels éléments binaires peuvent passer à travers et lesquels éléments binaires sont enlevés pour une branche ou sous-branche de codage particulière.

21. Procédé selon l'une des revendications 1 à 20, comprenant en outre l'étape consistant à choisir quelle partie de la séquence binaire d'informations a une plus grande priorité que d'autres parties de ladite séquence et sélectionner cette partie de la séquence binaire d'informations pour l'étape consistant à compléter, dans lequel les éléments binaires sont distribués à des segments de bloc de code différents.

22. Encodeur pour un dispositif de communication d'un système de communication sans fil pour encoder une séquence binaire d'informations formant un bloc de code, L'encodeur comprenant :
un moyen pour distribuer les éléments binaires de la séquence binaire d'informations formant un bloc de code et ayant des éléments binaires de longueur k dans une pluralité de n sous-ensembles d'éléments binaires d'informations, chaque sous-ensemble formant un segment de bloc de code ayant respectivement des éléments binaires de longueur k1 à kn ;
l'encodeur **caractérisé par**
un moyen pour compléter au moins un segment de bloc de code avec des éléments binaires d'informations par une répétition partielle de la séquence binaire d'informations qui ont également été distribués à au moins un segment de bloc de code différent ou par un remplissage de zéros, de telle sorte que la somme des longueurs k1 à kn des segments de bloc de code est plus élevée que la longueur de bloc de code k ; et
un moyen pour encoder les segments de bloc de code et le au moins un segment de bloc de code complété en utilisant de façon individuelle au moins un procédé d'encodage.

23. Dispositif de communication d'un système de communication sans fil comprenant un encodeur selon la revendication 22.
